# EUROPEAN PATENT APPLICATION

(11) **EP 2 629 181 A1**
(43) Date of publication of application: **21.08.2013**
(21) Application number: 11832380.7
(22) Date of filing: 15.09.2011
(51) Int. Cl.: G06F 3/041, G06F 3/048, H04M 1/247

(54) **MOBILE TERMINAL DEVICE AND DISPLAY METHOD FOR TOUCH PANEL IN MOBILE TERMINAL DEVICE**

(30) Priority: 13.10.2010 JP 2010230309
(71) Applicant: NEC CASIO Mobile Communications, Ltd., Kawasaki-shi Kanagawa 211-8666 (JP)
(72) Inventor: NAKAMURA Keigo, Kawasaki-shi Kanagawa 211-8666 (JP)
(74) Representative: Vossius & Partner
(86) International application number: PCT/JP2011/071068
(87) International publication number: WO 2012/049942

(57) **Abstract**

In a mobile terminal apparatus that can be operated with a touch panel, a picture is displayed on the touch panel in a manner suitable for a way of holding to improve the operability of the touch panel. Touch sensors fixed on the top side, the bottom side, the left side, and the right side of the mobile terminal apparatus detect a touch state of a hand that grips the mobile terminal apparatus. Thus, a way of holding determination unit determines a way of holding the mobile terminal apparatus based on the number of touch regions for which the touch sensors detect the touch state and the areas of the touch regions. Moreover, a display picture generation unit generates a display picture that corresponds to the way of holding determined by the way of holding determination unit, and displays the display picture on a display unit of the touch panel.

## Description

### TECHNICAL FIELD

The present invention relates to a mobile terminal apparatus and the like, such as a mobile phone and a personal digital assistant (PDA), and more specifically, to a mobile terminal apparatus that is provided with a touch panel for operation and to a display method for the touch panel in the mobile terminal apparatus.

### BACKGROUND ART

Recently, mobile terminal apparatuses, such as a mobile phone that is provided with a touch panel as a user interface, are increasing in number. The touch panel of such a mobile terminal apparatus is extremely convenient because the mobile terminal apparatus can be operated intuitively by simply touching a screen. However, since users hold mobile terminal apparatuses in different ways, the usability of a touch panel also changes in various ways. For example, depending on a way of holding a mobile terminal apparatus, there is a possibility that a user cannot operate a touch panel as the user desires because a screen is hidden by a finger that is touching the screen, and that the finger cannot reach a target position on the touch panel when an operation is performed with a finger of a hand that is holding the mobile terminal apparatus. Therefore, it is necessary to perform the operation after the way of holding the mobile terminal apparatus has been changed as the need arises.

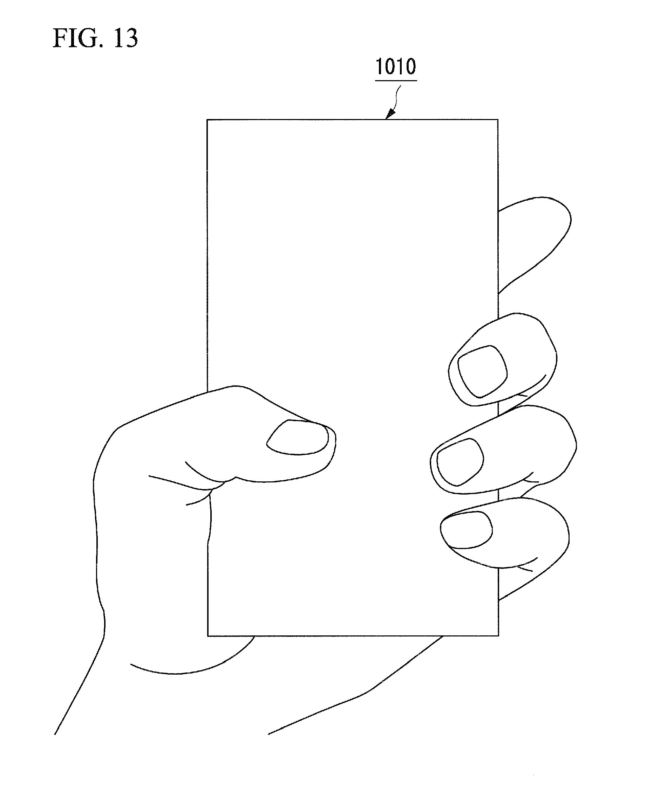

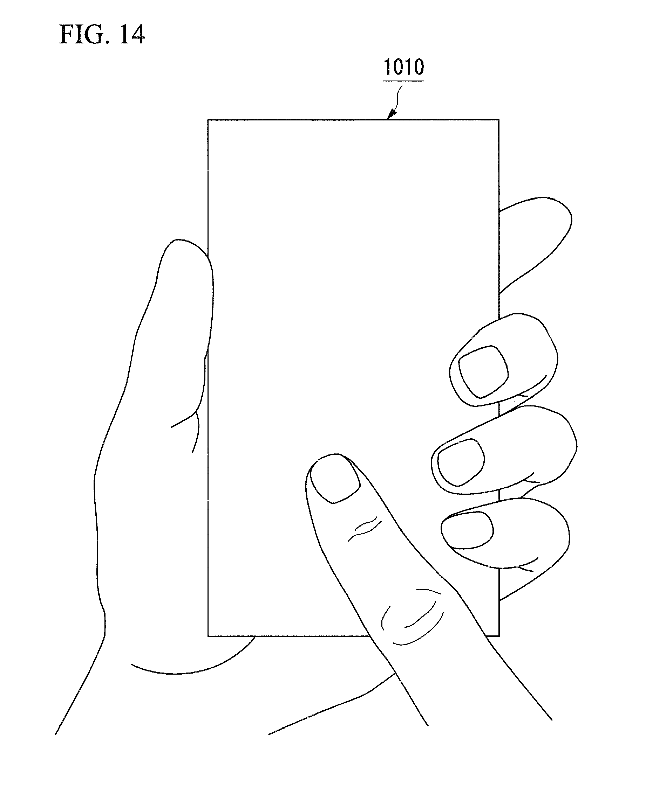

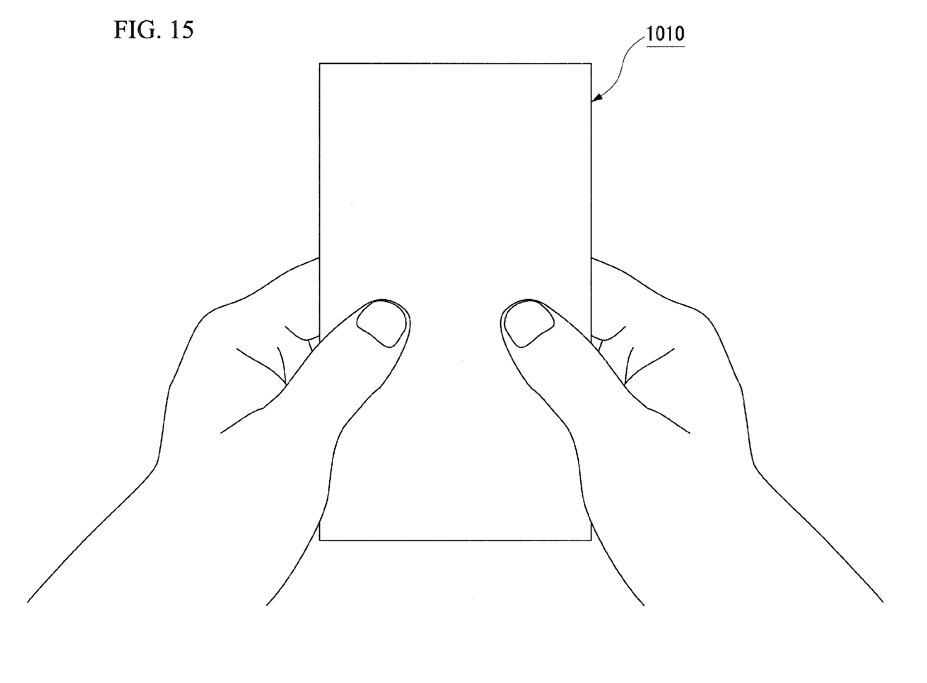

Moreover, ways of holding a mobile terminal apparatus using a touch panel can be roughly classified into the following three types. That is,
(1) A mobile terminal apparatus 1010 is held with one of the hands, and a touch panel is operated with the thumb of the hand (e.g., a way of holding and a way of operation as shown in FIG. 13).
(2) The mobile terminal apparatus 1010 is held with one of the hands, and the touch panel is operated with, for example, the forefinger of the other hand (e.g., a way of holding and a way of operation as shown in FIG. 14).
(3) The mobile terminal apparatus 1010 is held with both hands and the touch panel is operated with both of the thumbs (e.g., a way of holding and a way of operation as shown in FIG. 15).

Here, the thumb cannot reach an upper region of the touch panel when the touch panel is operated with a thumb of a hand that holds the mobile terminal apparatus, such as the way of holding and the way of operation of the mobile terminal apparatus described in (1) as shown in FIG. 13 and the way of holding and the way of operation of the mobile terminal apparatus described in (3) as shown in FIG. 15. As a result, in order to operate a position of the touch panel that cannot be reached by the thumb, it is necessary to touch the target position of the touch panel using the other hand; otherwise, it is impossible to operate the mobile terminal apparatus.

Moreover, in the case of the way of holding and the way of operation of the mobile terminal apparatus described in (1) as shown in FIG. 13 and in the case of the way of holding and the way of operation of the mobile terminal apparatus described in (2) as shown in FIG. 14, there is a case in which the mobile terminal apparatus is held with the right hand and a case in which the mobile terminal apparatus is held with the left hand. However, since the direction of a finger which touches the screen of the touch panel of the mobile terminal apparatus in the case in which the mobile terminal apparatus is held with the right hand is different from that in the case in which the mobile terminal apparatus is held with the left hand, depending on content displayed on the screen of the mobile terminal apparatus, there is a possibility that part of the content displayed on the screen of the mobile terminal apparatus is hidden by the finger that is touching the screen, and thus it is impossible for the user to determine the content displayed on the screen correctly.

Furthermore, mobile terminal apparatuses that are provided with an acceleration sensor (a G sensor) are also known. By providing an acceleration sensor in a mobile terminal apparatus in such a manner, when the longitudinal/transverse orientation of the mobile terminal apparatus is switched, it is possible to identify the upper side (i.e., the upper side of the screen at which the user looks) of the mobile terminal apparatus and automatically switch the longitudinal/transverse orientation of the screen. However, with this scheme, if the user operates the mobile terminal apparatus while the user is lying down, there is a possibility that the longitudinal/transverse orientation of the screen is switched in a manner that is different from that intended by the user.

Moreover, as a first related art, a technology is disclosed which makes it possible to sense a way of holding a mobile terminal apparatus using a touch sensor fixed on a right side portion or a left side portion of the mobile terminal apparatus, and change the arrangement state of operation buttons displayed on a touch panel in accordance with the way of holding the mobile terminal apparatus (e.g., see Patent Document 1). With this technology, irrespective of whether the mobile terminal apparatus is held with the left hand or the right hand, the arrangement state of the operation buttons on the touch panel is automatically changed so as to achieve the best usability, and thus it is possible for the user to operate the operation buttons on the touch panel with satisfactory usability and without stress.

Furthermore, as a second related art, a technology is also disclosed in which sheet-type pressure-sensitive sensors are fixed on the left side, the right side, and the back of a mobile terminal apparatus, the pressure-sensitive sensors detect the distribution state of regions touched by fingers, and operation buttons of a touch sensor are displayed with the operation buttons optimally arranged based on output signals of the pressure-sensitive sensors (e.g., see Patent Document 2).

Additionally, as a third related art, a technology of a mobile terminal apparatus is also disclosed which is configured such that transparent keys are superposed on almost the whole surface of a display unit of a touch panel display of the mobile terminal apparatus so that a key display region can be arranged arbitrarily, and a great number of touch sensors are arranged on the left side, the right side, and the back. With this technology, the way of grasping (way of holding) of the mobile terminal apparatus is determined based on the number of detections by touch sensors on the left side, the right side, and the back, and the key display region is automatically shifted in accordance with the way of holding the mobile terminal apparatus, and thus it is possible to realize a mobile terminal apparatus with satisfactory usability in operation (e.g., see Patent Document 3).

### Prior Art Documents

### Patent Documents

Patent Document 1: Japanese Unexamined Patent Application, First Publication No. 2009-169820
Patent Document 2: Japanese Unexamined Patent Application, First Publication No. 2008-27183
Patent Document 3: Japanese Unexamined Patent Application, First Publication No. 2010-154090

### SUMMARY OF INVENTION

### Problems to be solved by the Invention

In general mobile terminal apparatuses which are operated using a touch panel, it is impossible to determine the way of holding and an operation by a user, such as an operation with one hand, an operation with both hands, an operation with the right hand, and an operation with the left hand. As a result, for example, there is a possibility that no operation button exists in a range that can be operated by a finger when an operation with one hand is performed, and thus it is necessary to operate the touch panel using the other hand. Moreover, it is also impossible to identify whether the touch panel is operated with a finger of the left hand or the touch panel is operated with a finger of the right hand, and thus there is also a possibility that necessary information on the touch panel is hidden by a finger that is going to touch the touch panel and the necessary information disappears from sight, and thus the finger must be moved off the touch panel whenever the necessary information is checked; otherwise, the necessary information cannot be checked. Furthermore, with the technology which employs a mechanism of identifying the upward direction of a screen of a touch panel using an acceleration-sensor or the like, it is impossible to display a picture on the touch panel in the correct orientation when a user attempts to operate a mobile terminal apparatus while the user is lying down.

Moreover, in the technology of Patent Document 1, touch sensors are provided on upper portions of both sides of a mobile terminal apparatus, and a determination is made as to which hand holds the mobile terminal apparatus. However, with this technology, it is always necessary to touch an upper portion of a side of a housing with the thumb of one of the hands; otherwise, it is impossible to determine which one of a finger of the left hand and a finger of the right hand holds the mobile terminal apparatus. Therefore, in the case of the way of holding the mobile terminal apparatus described in (1) as shown in FIG. 13 and the way of holding the mobile terminal apparatus described in (3) as shown in FIG. 15 described above, it is impossible to use the touch panel well.

Furthermore, in the technology of Patent Document 2, sheet-type pressure-sensitive sensors are fixed on the left side, the right side, and the back of a mobile terminal apparatus, and a determination is made as to whether the mobile terminal apparatus is held with the left hand or the mobile terminal apparatus is held with the right hand. However, with this technology, it is impossible to determine the state in which the mobile terminal apparatus is held with both hands as shown in FIG. 15 and to determine whether the orientation of the mobile terminal apparatus is longitudinal or transverse when the longitudinal/transverse orientation of the mobile terminal apparatus is switched.

Additionally, in the technology of Patent Document 3, a great number of touch sensors are arranged on the left side, the right side, and the back of a mobile terminal apparatus, the mobile terminal apparatus determines a way of holding the mobile terminal apparatus based on the number of detections by the touch sensors and shifts a key display region in accordance with the way of holding. However, with this technology, it is impossible to detect the state in which the mobile terminal apparatus is held with both hands described in (3) as shown in FIG. 15. That is, with any one of the above-described technologies of Patent Documents 1, 2, and 3, it is impossible to display a picture in the optimum state so that the touch panel can be operated easily for any one of the above-described various ways of holding as described in (1), (2), and (3).

The present invention has been made in view of the above-described circumstances, and an exemplary object thereof is to provide a mobile terminal apparatus and a display method for a touch panel in the mobile terminal apparatus which are capable of improving, in a mobile terminal apparatus which can be operated using a touch panel, the operability of the touch panel by displaying a picture on the touch panel in a manner suitable for the way of holding.

### Means for Solving the Problems

In order to achieve the above exemplary object, the present invention provides a mobile terminal apparatus which includes: touch sensors which are fixed on top, bottom, left, and right sides of the mobile terminal apparatus and detect a touch state of a hand that grips the mobile terminal apparatus; a display unit which is formed on a touch panel that serves as a user interface; a way of holding determination unit which determines a way of holding the mobile terminal apparatus based on the number of touch regions for which the touch state is detected by the touch sensors and the areas of the touch regions; and a display picture generation unit which generate a display picture in accordance with the way of holding determined by the way of holding determination unit and displays the display picture on the display unit.
Moreover, the present invention provides a mobile terminal apparatus which includes: a touch panel which serves as a user interface, identifies that a finger of a hand that grips the mobile terminal apparatus is approaching without a touch by the finger, and detects a touch state of the hand; a display unit which is formed on the touch panel; a way of holding determination unit which determines a way of holding the mobile terminal apparatus based on the number of touch regions for which the touch panel detects the touch state and the areas of the touch regions; and a display picture generation unit which generates a display picture in accordance with the way of holding determined by the way of holding determination unit and displays the display picture on the display unit.

Furthermore, the present invention provides a display method for a touch panel in a mobile terminal apparatus, and the method includes: detecting, in touch sensors fixed on a top side, a bottom side, a left side, and a right side of the mobile terminal apparatus, a touch state of a finger and a palm of a hand that grips the mobile terminal apparatus; determining a way of holding the mobile terminal apparatus based on the number of touch regions for which the touch sensors detect the touch state and the areas of the touch regions; and generating a display picture in accordance with the determined way of holding the mobile terminal apparatus and displaying the display picture on a display unit formed on the touch panel that serves as a user interface.
Additionally, the present invention provides a display method for a touch panel in a mobile terminal apparatus, and the method includes: identifying, in the touch panel that serves a user interface, that a finger of a hand that grips the mobile terminal apparatus is approaching without a touch by the finger, and detecting a touch state of the finger and a palm of the hand; determining a way of holding the mobile terminal apparatus based on the number of touch regions for which the touch panel detects the touch state and the areas of the touch regions; and generating a display picture in accordance with the determined way of holding the mobile terminal apparatus and displaying the display picture on a display unit formed on the touch panel.

### Exemplary Advantageous Effects of Invention

In the present invention, touch sensors provided on the top side, the bottom side, the left side, and the right side of a mobile terminal apparatus detect touch regions of fingers and palms of hands that grip the mobile terminal apparatus, the way of holding determination unit determines various ways of holding the mobile terminal apparatus in detail based on the number of the touch regions and the areas of the touch regions, and the display picture generation unit displays the optimum picture on the display unit of the touch panel so as to conform to the way of holding. Thus, a picture is displayed on the display unit of the touch panel in accordance with the way of holding the mobile terminal apparatus so as to maximize the operability by a user, and the picture is provided as a user interface, and thus it is possible to provide a mobile terminal apparatus that provides satisfactory usability for the user.

### BRIEF DESCRIPTION OF DRAWINGS

FIG. 1 is a block diagram illustrating a configuration of a mobile terminal apparatus in accordance with exemplary embodiments of the present invention.
FIG. 2 is a perspective view illustrating the state in which a touch sensor is provided on each side of the mobile terminal apparatus shown in FIG. 1.
FIG. 3 is a conceptual diagram illustrating the state in which a mobile terminal apparatus is held with the left hand and a touch panel of the mobile terminal apparatus is operated with the thumb of the left hand in a first exemplary embodiment of the present invention.
FIG. 4 is a conceptual diagram illustrating the state in which the mobile terminal apparatus is held with the left hand and the touch panel of the mobile terminal apparatus is operated with the forefinger of the right hand in the first exemplary embodiment of the present invention.
FIG. 5 is a conceptual diagram illustrating the state in which the mobile terminal apparatus is held with both hands and the touch panel of the mobile terminal apparatus is operated with the thumbs of both hands in the first exemplary embodiment of the present invention.
FIG. 6 is a diagram illustrating a relationship between touch patterns of the touch sensors and determination results of ways of holding the mobile terminal apparatus in the first exemplary embodiment of the present invention.
FIG. 7 is a flowchart illustrating a flow of a determination process of the way of holding the mobile terminal apparatus in the first exemplary embodiment of the present invention.
FIG. 8A is a diagram illustrating an effective operation region when the touch panel is operated with a thumb in the first exemplary embodiment of the present invention, and it illustrates an effective region in the case of an operation with the thumb of the left hand.
FIG. 8B is a diagram illustrating an effective operation region when the touch panel is operated with thumbs in the first exemplary embodiment of the present invention, and it illustrates an effective operation region in the case of an operation with the thumbs of both hands.
FIG. 9 is a diagram describing the state in which a display forbidden region is appropriately set depending on which one of the left hand and the right hand operates the touch panel in the first exemplary embodiment of the present invention.
FIG. 10A is a diagram illustrating the state in which an icon is displayed so as to avoid the display forbidden region of the touch panel in the first exemplary embodiment of the present invention, and it illustrates the case of an operation with the left hand.
FIG. 10B is a diagram illustrating the state in which an icon is displayed so as to avoid the display forbidden region of the touch panel in the first exemplary embodiment of the present invention, and it illustrates the case of an operation with the right hand.
FIG. 11 is an external perspective view of a mobile terminal apparatus in accordance with a second exemplary embodiment of the present invention.
FIG. 12A is a diagram describing a determination of the way of holding the mobile terminal apparatus by touching a touch panel in the second exemplary embodiment of the present invention, and it illustrates the case in which the front of the touch panel is touched.
FIG. 12B is a diagram describing a determination of the way of holding the mobile terminal apparatus by touching the touch panel in the second exemplary embodiment of the present invention, and it illustrates the case in which a side of the touch panel is touched.
FIG. 13 is a diagram illustrating an example of a way of holding a mobile terminal apparatus when the mobile terminal apparatus is held with one of the hands and the touch panel is operated with the thumb of the hand.
FIG. 14 is a diagram illustrating an example of a way of holding the mobile terminal apparatus when the mobile terminal apparatus is held with one of the hands and the touch panel is operated with, for example, the forefinger of the other hand.
FIG. 15 is a diagram illustrating an example of the way of holding the mobile terminal apparatus when the mobile terminal apparatus is held with both hands and the touch panel is operated with the thumbs of both hands.

### MODES FOR CARRYING OUT THE INVENTION

The present invention is configured such that in a mobile terminal apparatus that can be operated with a touch panel, touch sensors are mounted on the top side, the bottom side, the left side, and the right side of the mobile terminal apparatus, a determination is made as to which one of the left hand and the right hand holds the mobile terminal apparatus, the upward direction of the mobile terminal apparatus is accurately determined, and a picture is displayed on the touch panel in a manner suitable for the way of holding. As a result, it is possible to easily operate the touch panel while holding the mobile terminal apparatus, and thus the usability of the mobile terminal apparatus is further improved. Hereinafter, some exemplary embodiments of mobile terminal apparatuses in accordance with the present invention will be described in detail with reference to the drawings. It is to be noted that the mobile terminal apparatuses described in the following exemplary embodiments can be, for example, mobile phones.

### «First Exemplary Embodiment»

In an exemplary embodiment of the present invention, touch sensors are provided on the top side, the bottom side, the left side, and the right side of a mobile terminal apparatus using a touch panel, a determination is made how a user holds the mobile terminal apparatus based on the number of fingers touching the touch sensors and the areas thereof (touch areas), determinations are made appropriately as to: whether the orientation of the mobile terminal apparatus is longitudinal or transverse; which one of the hands holds the mobile terminal apparatus; and how the mobile terminal apparatus is being operated, in accordance with a way of holding the mobile terminal apparatus, and content displayed on a screen of the mobile terminal apparatus is switched so as to provide satisfactory usability. As a result, it is possible for a user to easily operate the mobile terminal apparatus by means of the touch panel in a natural manner, irrespective of the way of holding the mobile terminal apparatus.

In other words, it is possible for the mobile terminal apparatus of the present exemplary embodiment to determine the way of holding the mobile terminal apparatus based on the number of regions where touches are detected by the touch sensors as well as their areas, determine the way of holding more accurately than the technologies of the above-described Patent Documents 1, 2, and 3, and display an optimum picture on the touch panel so as to conform to the way of holding. Therefore, it is possible to realize a mobile terminal apparatus that provides more satisfactory usability than the related arts.

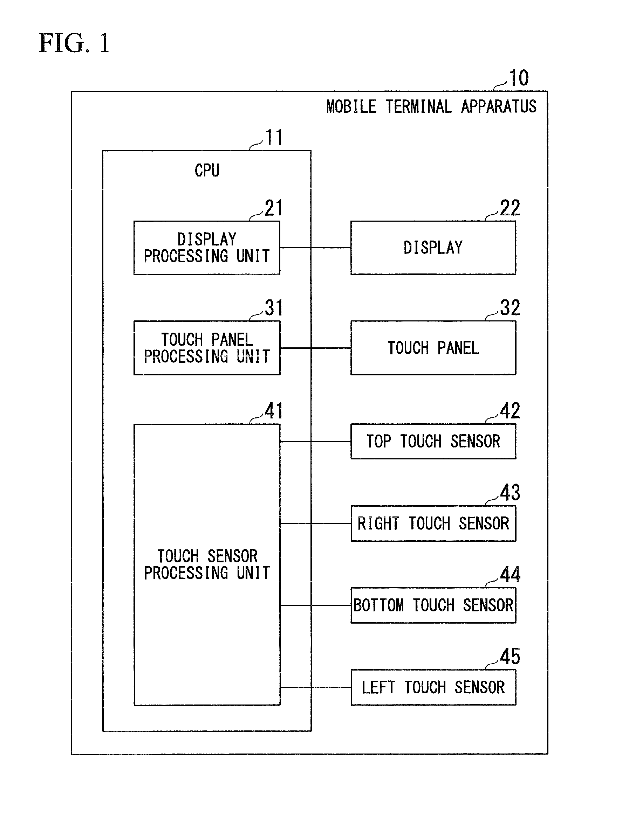

First, a configuration of the mobile terminal apparatus in accordance with an exemplary embodiment of the present invention will be described. FIG. 1 is block diagram illustrating a configuration of the mobile terminal apparatus in accordance with the exemplary embodiment of the present invention. In FIG. 1, a mobile terminal apparatus 10 is provided with: a central processing unit (CPU) 11 which performs the overall processing of the mobile terminal apparatus 10; a display (display unit) 22 which displays a picture; a touch panel 32 which serves as a user interface; and a top touch sensor 42, a right touch sensor 43, a bottom touch sensor 44, and a left touch sensor 45 which are fixed on the top, right, bottom, and left sides of the mobile terminal apparatus 10, respectively. In addition, the CPU 11 is provided with: a display processing unit (display picture generation unit) 21 which controls contents displayed on the display 22; a touch panel processing unit 31 which identifies that a user has operated the touch panel 32; and a touch sensor processing unit (way of holding determination unit) 41 which identifies touches to the touch sensor 42, 43, 44, and 45 provided on the sides.

Main structural elements of the mobile terminal apparatus 10 will be described in more detail. The touch sensors 42, 43, 44, and 45 are fixed on the top side, the right side, the bottom side, and the left side of the mobile terminal apparatus 10, respectively, and they detect the touch state of a hand that grips the mobile terminal apparatus 10. The touch panel 32 is formed on a display screen of the display (display unit) 22, and it realizes functions serving as a user interface. The touch sensor processing unit (way of holding determination unit) 41 determines a way of holding the mobile terminal apparatus 10, an operation method using a finger, and the upward direction of the mobile terminal apparatus, based on the number of touch regions where touch states are detected by the touch sensors 42, 43, 44, and 45 as well as their areas. The display processing unit (display picture generation unit) 21 generates a display picture in accordance with the way of holding, the operation method using a finger, and the upward direction of the mobile terminal apparatus that have been determined by the way of holding determination unit, and displays the display picture on the display (display unit) 22.

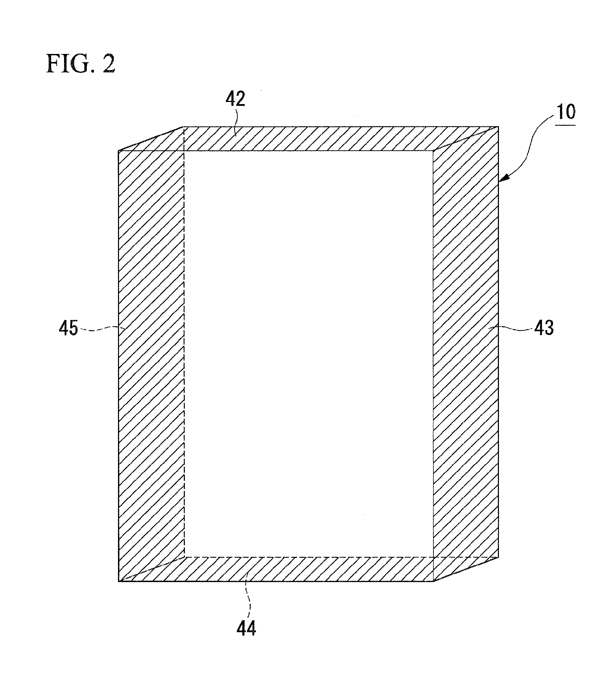

FIG. 2 is a perspective view illustrating the state in which the touch sensors 42, 43, 44, and 45 are provided on the sides of the mobile terminal apparatus 10 shown in FIG. 1. As shown in FIG. 2, the top touch sensor 42, the right touch sensor 43, the bottom touch sensor 44, and the left touch sensor 45 are provided on the top side, the right side, the bottom side, and the left side of the mobile terminal apparatus 10, respectively. Such touch sensors can be realized using, for example, pressure-sensitive sensors, resistive-film-based sensors, or capacitive sensors, and the detailed description thereof is omitted here because their principles are well known.

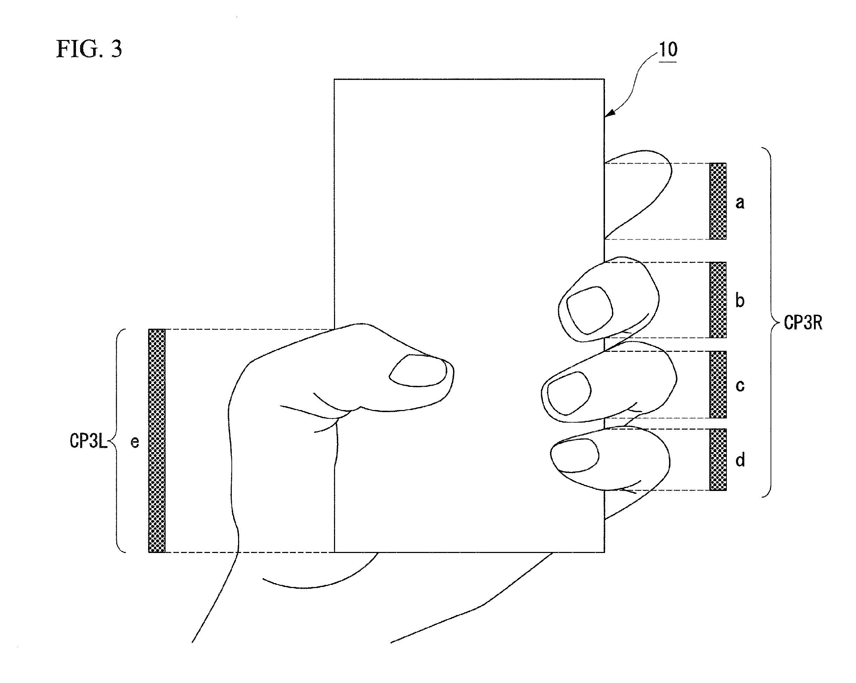

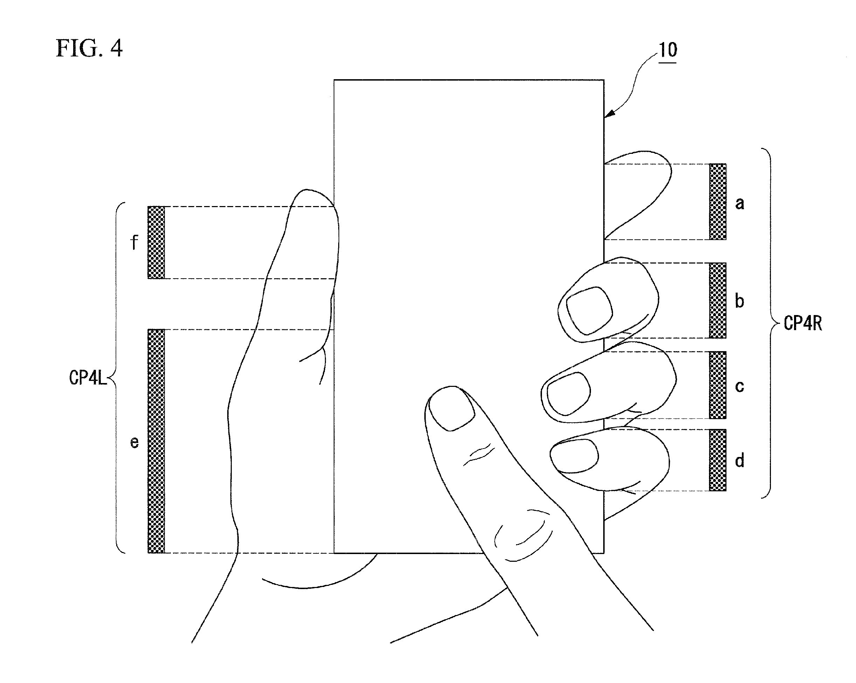

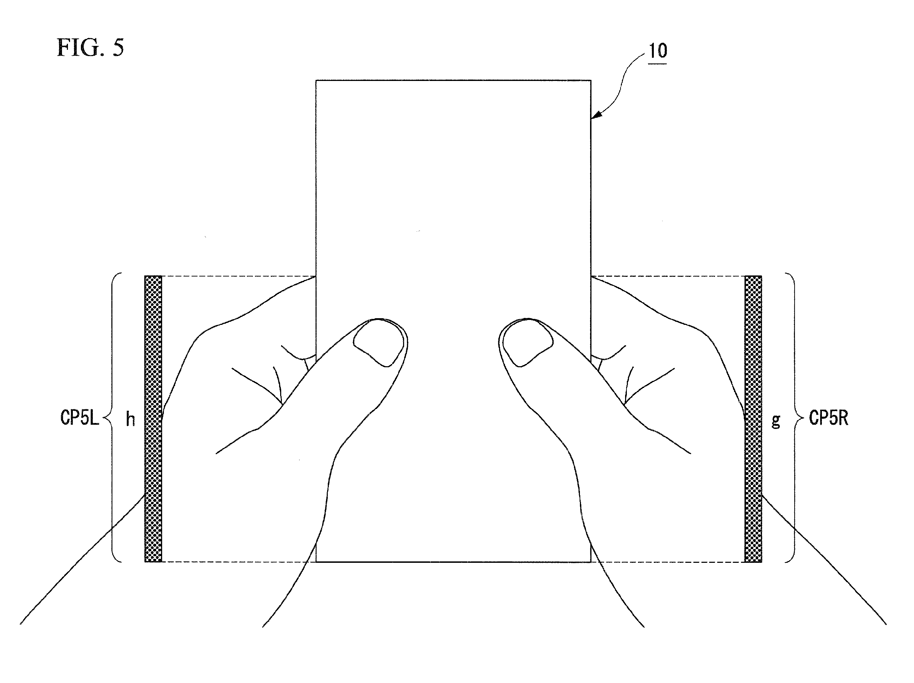

Next, operations based on which the mobile terminal apparatus 10 shown in FIG. 1 and FIG. 2 determines a way of holding the mobile terminal apparatus 10 will be described in detail with reference to FIG. 3, FIG. 4, and FIG. 5. FIG. 3 is a conceptual diagram illustrating the state in which the mobile terminal apparatus 10 is held with the left hand and the touch panel 32 of the mobile terminal apparatus 10 is operated with the thumb of the left hand in the first exemplary embodiment of the present invention. It is to be noted that, in FIG. 3, a reference symbol CP3L denotes a touch portion of the touch sensor 45 on the left side, and a reference symbol CP3R denotes touch portions of the touch sensor 43 on the right side. Moreover, FIG. 4 is a conceptual diagram illustrating the state in which the mobile terminal apparatus 10 is held with the left hand and the touch panel 32 of the mobile terminal apparatus 10 is operated with the forefinger of the right hand in the first exemplary embodiment of the present invention. It is to be noted that, in FIG. 4, a reference symbol CP4L denotes touch portions of the touch sensor 45 on the left side, and a reference symbol CP4R denotes touch portions of touch sensor 43 on the right side. Furthermore, FIG. 5 is a conceptual diagram illustrating the state in which the mobile terminal apparatus 10 is held with both hands and the touch panel 32 of the mobile terminal apparatus 10 is operated with the thumbs of both hands in the first exemplary embodiment of the present invention. It is to be noted that, in FIG. 5, a reference symbol CP5L denotes a touch portion of the touch sensor 45 on the left side, and a reference symbol CP5R denotes a touch portion of the touch sensor 43 on the right side. In addition, each of the figures schematically illustrates the ranges of the touch portions of the fingers and the palms of the left and right hands sensed by the right touch sensor 43 on the right side and the left touch sensor 45 on the left side of the mobile terminal apparatus 10.

FIG. 3 illustrates the state in which the four fingers of the left hand other than the thumb support the mobile terminal apparatus 10 at the right side of the mobile terminal apparatus 10 when the mobile terminal apparatus 10 is held with the left hand. As a result, the four fingers touch regions a, b, c, and d of the right touch sensor 43 on the right side of the mobile terminal apparatus 10. It is to be noted that, depending on the size of the mobile terminal apparatus 10 and the way of holding by the user, all the four fingers of the left hand other than the thumb do not always touch the regions a, b, c, and d of the right touch sensor 43 on the right side of the mobile terminal apparatus 10. However, so that the mobile terminal apparatus 10 is held in a stable manner, normally, at least two fingers touch regions of the right touch sensor 43 on the right side (e.g., b, c, and d). Moreover, the thumb does not touch the left touch sensor 45 on the left side, and the palm of the left hand touches a region e of the left touch sensor 45 on the left side over a wide range.

Therefore, although each of the right touch sensor 43 and the left touch sensor 45 requires determination means for distinguishing the size of each finger (each of the touch areas a, b, c, and d) and the size of a palm (the touch area e), in the first exemplary embodiment of the present invention, any technique can be used for the determination means. For example, a method in which the conceivable maximum size of the touch area between a finger and a touch sensor is assumed to be R, and a size less than or equal to the size R is determined as a finger and a size exceeding the size R is determined as a palm can be used. That is, since each of the touch areas a, b, c, and d of the right touch sensor 43 is less than or equal to the size R, it is determined that four fingers are touching; since the touch area e of the left touch sensor 45 exceeds the size R, it is determined that a palm is touching.

It is to be noted that although FIG. 3 illustrates the state in which the mobile terminal apparatus 10 is held with the left hand, when the mobile terminal apparatus 10 is held with the right hand and the touch panel 32 of the mobile terminal apparatus 10 is operated with the thumb of the right hand, the left and the right are opposite to those of FIG. 3, and thus the palm of the right hand widely touches the right touch sensor 43 on the right side and two or more fingers among the four fingers of the right hand other than the thumb narrowly touch the left touch sensor 45 on the left side.

As a result, it is possible to determine whether a user is attempting to operate the touch panel 32 with the thumb of the left hand while holding the mobile terminal apparatus 10 with the left hand or the user is attempting to operate the touch panel 32 with the thumb of the right hand while holding the mobile terminal apparatus 10 with the right hand. Therefore, it is possible to display a picture on the touch panel 32 in the optimum manner in accordance with the state of the way of holding.

FIG. 4 is a diagram illustrating an example of the way of holding when the mobile terminal apparatus 10 is held with the left hand and the touch panel 32 of the mobile terminal apparatus 10 is operated with the forefinger of the right hand. However, the touch panel 32 may be operated with the middle finger, the third finger, or the little finger of the right hand, rather than the forefinger of the right hand. In the case of such a way of holding, similar to FIG. 3, two or more fingers among the four fingers of the left hand other than the thumb touch the right touch sensor 43 on the right side. That is, similar to FIG. 3, two or more touch areas among the touch areas a, b, c, and d of the right touch sensor 43 are present.

On the other hand, not only the palm of the left hand but also the thumb of the left hand touches the left touch sensor 45 on the left side. That is, unlike FIG. 3, the palm of the left hand touches the region e of the left touch sensor 45 on the left side over a wide area, and the thumb touches a region f over a narrow area. By detecting such a touch state, it is possible to determine that the mobile terminal apparatus 10 is held with the left hand and the touch panel 32 of the mobile terminal apparatus 10 is operated with a finger (e.g., the forefinger) of the right hand as shown in FIG. 4.

It is to be noted that although FIG. 4 illustrates the state in which the mobile terminal apparatus 10 is held with the left hand, when the mobile terminal apparatus 10 is held with the right hand and the touch panel 32 of the mobile terminal apparatus 10 is operated with the forefinger of the left hand, the left and the right are opposite to those of FIG. 4, and thus the palm of the right hand and the thumb of the right hand touch the right touch sensor 43 on the right side and two or more fingers among the four fingers of the right hand other than the thumb touch the left touch sensor 45 on the left side.

As a result, it is possible to determine whether a user is attempting to operate the mobile terminal apparatus 10 with a finger of the right hand while holding the mobile terminal apparatus 10 with left hand or the user is attempting to operate the mobile terminal apparatus 10 with a finger of the left hand while holding the mobile terminal apparatus 10 with the right hand. Therefore, it is possible to display an appropriate image on a screen of the touch panel 32 in accordance with the state of the way of holding.

FIG. 5 is a diagram illustrating an example of a way of holding when the mobile terminal apparatus 10 is held with both hands and the touch panel 32 of the mobile terminal apparatus 10 is operated with the thumbs of both hands. In this case, the right touch sensor 43 on the right side and the left touch sensor 45 on the left side are touched equally on the left side and the right side, and the palm of the left hand and the palm of the right hand touch the touch sensor 45 and the touch sensor 43, respectively. That is, the area of a touch region g of the right touch sensor 43 is approximately the same as that of a touch region h of the left touch sensor 45.

As a result, it is possible to determine that a user is attempting to operate the mobile terminal apparatus 10 with the thumbs of both hands while holding the mobile terminal apparatus 10 with both hands. Therefore, it is possible to display an appropriate image on a screen of the touch panel 32 in accordance with the state of the way of holding.

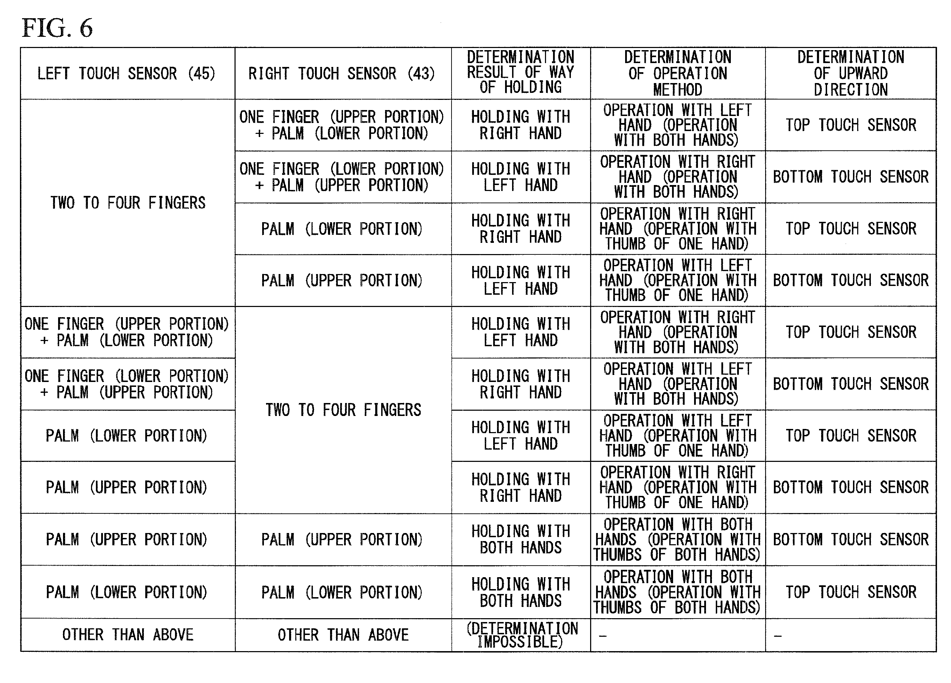

FIG. 6 is a diagram illustrating a relationship between touch patterns of touch sensors and determination results of ways of holding the mobile terminal apparatus in the first exemplary embodiment of the present invention. That is, this figure illustrates determination results that indicate which one of the hands holds the mobile terminal apparatus 10, whether the touch panel 32 is being operated with one hand or the touch panel 32 is being operated with both hands, and which is the upward direction of the mobile terminal apparatus 10, when the way of holding the mobile terminal apparatus 10 are those as shown, for example, in FIG. 3 to FIG. 5.

When the mobile terminal apparatus 10 is held in the longitudinal orientation, normally, the touch sensors 42 and 44 fixed on the top and bottom sides are not touched by any finger or any palm as shown in FIG. 3 to FIG. 5, and thus the way of holding the mobile terminal apparatus is determined based on only the presence or absence of touches on the touch sensors 43 and 45 of the right and left sides. However, depending on a user, a case is conceivable in which a finger and/or a palm touch the top and bottom touch sensors 42 and 44, and thus touch information of the top and bottom touch sensors 42 and 44 may also be required depending on the way of holding the mobile terminal apparatus 10. In addition, when the mobile terminal apparatus 10 is held with both hands, there is a possibility that four fingers other than a thumb touch rather than a palm, and palms touch upper portions of the right and left touch sensors 43 and 45.

In this way, for users who perform a way of holding other than the ways of holding shown in FIG. 6, it is conceivable that the mobile terminal apparatus 10 is provided with a function of individually setting ways of holding in the longitudinal orientation and in the transverse orientation for each of the users. For example, the mobile terminal apparatus 10 can pre-store touch positions of fingers and palms with respect to the top, right, bottom, and left touch sensors 42, 43, 44, and 45 as well as the longitudinal orientation and the transverse orientation of the mobile terminal apparatus 10, for the case in which a user performs holding with one hand and an operation with one hand (an operation with a thumb), the case in which the user performs holding with one hand and an operation with both hands (an operation with the other hand), the case in which the user performs holding with both hands and an operation with both hands, and the like.

Next, various determination methods when a user holds the mobile terminal apparatus 10 in accordance with the ways as shown in FIG. 3 to FIG. 5 will be described in detail with reference to FIG. 6. That is, FIG. 6 illustrates a method for determining a way of holding and an operation method based on how a finger and a palm is touching the right and left touch sensors 43 and 45. In other words, FIG. 6 illustrates criteria for a determination of a way of holding the mobile terminal apparatus 10 and a determination of an operation method using a finger based on the state of the finger or a palm detected by the left touch sensor 45 and the right touch sensor 43. Moreover, the upward direction of the mobile terminal apparatus 10 is also determined.

For example, in FIG. 6, when the left touch sensor 45 detects two to four fingers, and the right touch sensor 43 detects one finger at its upper portion and a palm at its lower portion, a determination can be made such that a determination result of the way of holding is holding with the right hand, a determination result of the operation method is an operation with the left hand (or an operation with both hands), and the upward direction is determined as the top touch sensor. Such determination results indicate the state in which the mobile terminal apparatus 10 is held with the right hand and the touch panel 32 is operated with the forefinger of the left hand, which is a variant of FIG. 4.

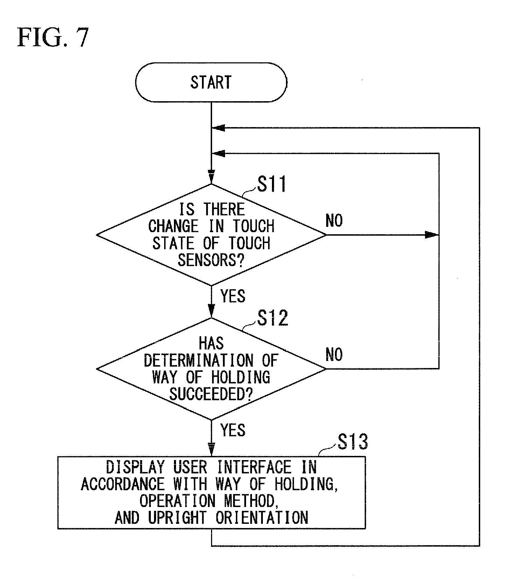

FIG. 7 is a flowchart illustrating a flow of a determination process of a way of holding the mobile terminal apparatus 10 in the first exemplary embodiment of the present invention. Hereinafter, the flow of the determination process of the way of holding the mobile terminal apparatus 10 in the first exemplary embodiment of the present invention will be described with reference to FIG. 1, FIG. 6, and FIG. 7.

In FIG. 7, the touch sensor processing unit 41 monitors touch states of the top touch sensor 42, the right touch sensor 43, the bottom touch sensor 44, and the left touch sensor 45, and checks whether or not there is a change in touch state of one of the touch sensors 42, 43, 44, and 45 (step S11). Here, if there is no change in touch state, a change in touch state is repetitively checked. In contrast, if there is a change in touch state, a determination process of the way of holding the mobile terminal apparatus 10 is performed in accordance with the table of FIG. 6 (step S12).

For example, in the determination process of the way of holding in step S12, when the left touch sensor 45 detects two to four fingers, and the right touch sensor 43 detects one finger at its lower portion and a palm at its upper portion, a determination is made such that a determination result of the way of holding is holding with the left hand, a determination result of the operation method is an operation with the right hand (or an operation with both hands), and the upward direction of the mobile terminal apparatus 10 is determined as the bottom touch sensor. That is, it is determined that the way of holding is holding with the left hand, as shown in FIG. 4 but the mobile terminal apparatus 10 is held upside down.

Moreover, when the result of the determination process of the way of holding in step S12 indicates that a determination is impossible (step S12: NO), this means the state in which the way of holding the mobile terminal apparatus 10 is not settled or the way of holding is not normal, and thus content displayed on the display 22 is not changed. Therefore, the processing returns to a determination process of the touch states of the touch sensors in step S 11 again.

In contrast, when the result of the determination process of the way of holding in step S12 does not indicate that a determination is impossible (step S12: YES), the touch sensor processing unit 41 directs the display processing unit 21 to display a user interface (UI) for operating the touch panel 32 in accordance with the determination result (the way of holding, the operation method, and the upward direction as shown in FIG. 6) (step S13).

Here, when the operation method is an operation other than an operation with a thumb, it is possible to easily touch any position on the screen of the touch panel 32 irrespective of whether the way of holding is holding with the right hand, holding with the left hand, or holding with both hands, and thus it is not necessary to restrict the region for the user interface.

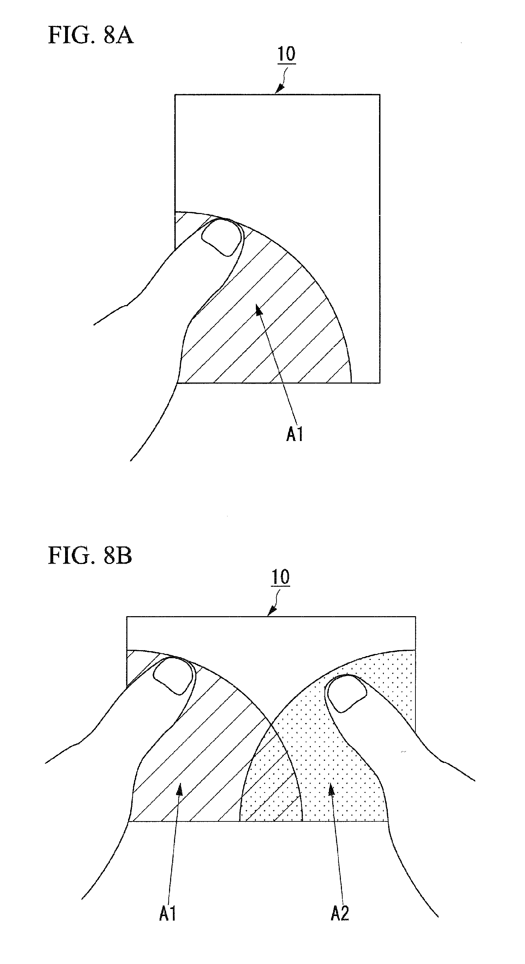

In contrast, when the operation method is an operation with a thumb, it is necessary to show an effective region, which can be operated with the thumb, on the screen of the touch panel 32. FIG. 8A and FIG. 8B are diagrams illustrating effective operation regions when the touch panel 32 is operated with a thumb in the first exemplary embodiment of the present invention. FIG. 8A illustrates an effective operation region A1 in the case of an operation with the thumb of the left hand, and FIG. 8B illustrates effective operation regions A 1 and A2 in the case of an operation with the thumbs of both hands. It is to be noted that, in FIG. 8B, the reference symbol A2 denotes an effective operation region in the case of an operation with the thumb of the right hand. That is, when the touch panel 32 is operated with a thumb as shown in the above-described FIG. 3 or FIG. 5, it is necessary to display a button, a tab, or the like in the effective regions A1 and A2 of the touch panel 32, which can be operated with a thumb, and create a user interface with which the touch panel 32 can be operated in accordance with only an operation with one hand as shown in FIG. 8A and FIG. 8B.

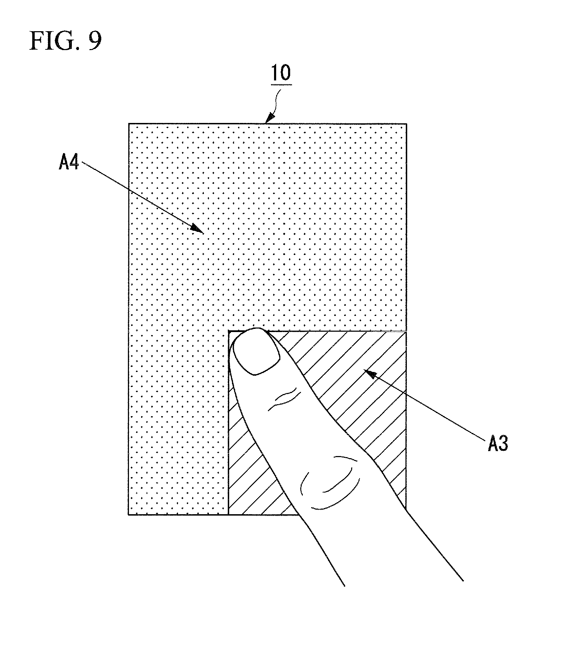

FIG. 9 is a diagram describing the state in which an appropriate display forbidden region is set depending on whether the touch panel 32 is operated with the left hand or the touch panel 32 is operated with the right hand in the first exemplary embodiment of the present invention. That is, FIG. 9 illustrates a screen showing what kind of display is performed on the display 22 depending on whether the touch panel 32 is operated with the left hand or the touch panel 32 is operated with the right hand. For example, when the touch panel 32 is operated with the forefinger of the right hand, a lower right region of the touch panel 32 is hidden by the forefinger and disappears from sight. Therefore, in the case of the operation with the right hand, the lower right region is set as a display forbidden region A3, and the other region in the touch panel 32 is set as an effective display region A4. In the case of an operation with the left hand, in FIG. 9, it is necessary to set a lower left region as a display forbidden region and display necessary information only in an effective display region other than the display forbidden region.

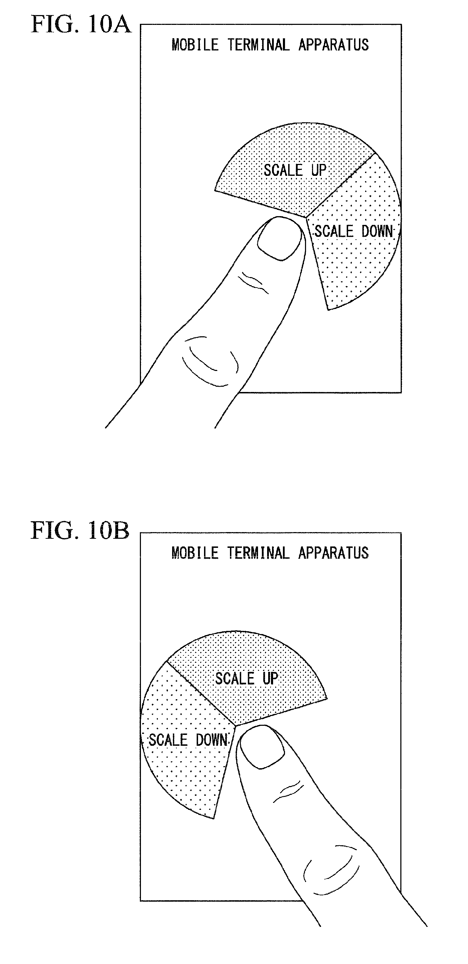

FIG. 10A and FIG. 10B are diagrams illustrating the state in which an icon is displayed so as to avoid the display forbidden region of the touch panel 32 in the first exemplary embodiment of the present invention. FIG. 10A illustrates the case of an operation with the left hand and FIG. 10B illustrates the case of an operation with the right hand. That is, FIG. 10A and FIG. 10B illustrate specific examples of the display of FIG. 9, and they illustrate the case in which an icon of a semicircular button is displayed for scale up/scale down operations when the touch panel 32 is touched. When the touch panel is operated with a finger of the left hand, an icon of a semicircular button is displayed in an upper right portion of a screen as shown in FIG. 10A; when the touch panel is operated with a finger of the right hand, it is necessary to display an icon of a semicircular button in an upper left portion as shown in FIG. 10B,

As described above, in the first exemplary embodiment of the present invention, touch sensors are provided at least on both the left side and the right side of the mobile terminal apparatus, and thus it is possible to determine the way of holding the mobile terminal apparatus and an operation method suitable for the way of holding. Moreover, since the way of holding and the appropriate operation method of the mobile terminal apparatus are determined, it is possible to determine the state such as an operation with a thumb while holding with one hand and an operation with both of the thumbs while holding with both hands. As a result, when the way of holding becomes a way of holding for an operation with a thumb, it is possible to appropriately operate the touch panel using only the thumb by displaying a button and the like within only an effective region for the operation with the thumb.

Furthermore, since the way of holding the mobile terminal apparatus and the appropriate operation method are determined, it is possible to determine whether the mobile terminal apparatus is being operated with a finger on the left or the mobile terminal apparatus is being operated with a finger on the right. As a result, by displaying a picture so that display is not hidden by the finger that is operating, it is possible to avoid the situation in which displayed information cannot be identified at the time of the operation. In addition, since the upward direction of a screen can be immediately determined by determining the way of holding the mobile terminal apparatus, it is possible to display the picture on the touch panel in a correct orientation irrespective of whether a user is standing or the user is lying down.

### «Second Exemplary Embodiment»

In the above-described first exemplary embodiment, touch sensors are provided on the top side, the bottom side, the left side, and the right side of the mobile terminal apparatus and a way of holding the mobile terminal apparatus is determined based on information detected by the touch sensors, but the touch sensors are not necessarily provided. Thus, in a second exemplary embodiment, a method for determining the way of holding the mobile terminal apparatus without providing touch sensors in the mobile terminal apparatus will be described.

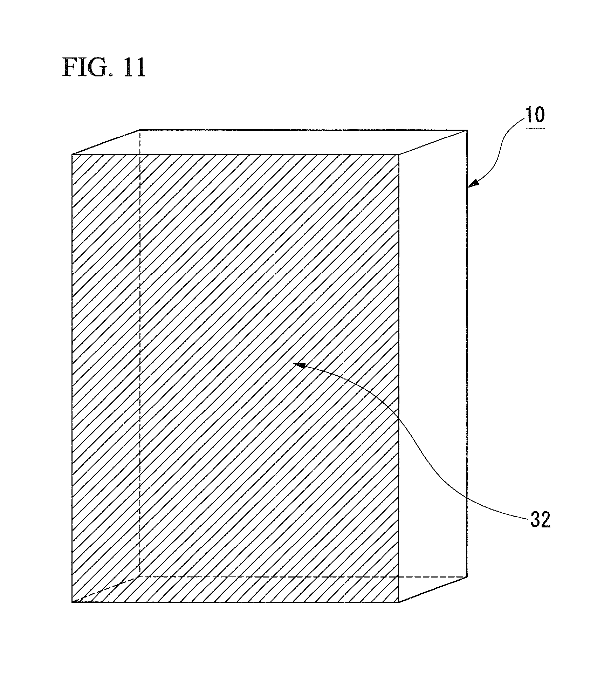

FIG. 11 is an external perspective view of a mobile terminal apparatus in accordance with the second exemplary embodiment of the present invention. As shown in the figure, it is possible to determine a way of holding the mobile terminal apparatus 10 using the touch panel 32 provided on the front of the mobile terminal apparatus 10, instead of the top, bottom, left, and right touch sensors on a frame of the mobile terminal apparatus 10. Such a determination technique will be described below in detail.

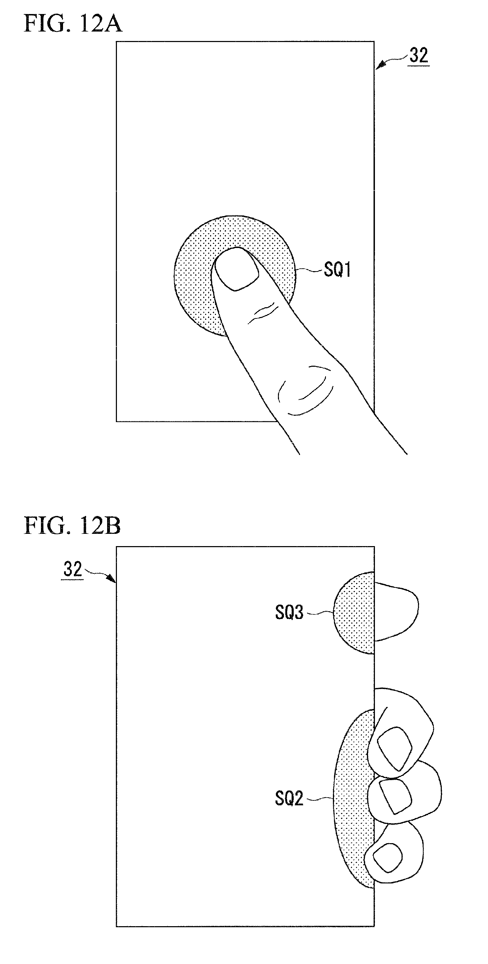

FIG. 12A and FIG. 12B are diagrams describing determinations of ways of holding the mobile terminal apparatus 10 based on touch portions of the touch panel 32 in the second exemplary embodiment of the present invention. FIG. 12A illustrates the case in which the front of the touch panel 32 is touched, and FIG. 12B illustrates the case in which a side of the touch panel 32 is touched.

That is, as shown in FIG. 12A, normally, upon touching a screen of the touch panel 32 provided on the front of the mobile terminal apparatus 10 with a finger, the touch state of a circle SQ1 is identified. Moreover, when a side of the touch panel 32 of the mobile terminal apparatus 10 is touched with a finger as shown in FIG. 12B, the touch states of semicircles SQ2 and SQ3 are detected. Therefore, when the touch states of the semicircles SQ2 and SQ3 as shown in FIG. 12B are detected, the mobile terminal apparatus 10 identifies that fingers or a palm of a user is touching a side of the mobile terminal apparatus 10, so that it is possible to determine whether or not a side of the mobile terminal apparatus 10 is touched even when touch sensors are not provided on the top, the bottom, the left, and the right of the mobile terminal apparatus 10. As a result, it is possible to determine whether the mobile terminal apparatus 10 is held with the left hand, it is held with the right hand, or it is held with both hands.

However, since resistive-film-based touch panels cannot identify a touch by a finger unless the touch panel 32 is actually pressed, a device that can identify that a finger is approaching without a touch to the touch panel with the finger, such as a capacitive touch panel, is used as the touch panel 32.

Although some exemplary embodiments of mobile terminal apparatuses in accordance with the present invention have been described above in detail with reference to the drawings, the specific configuration of the present invention is not limited to these exemplary embodiments, and changes in design or the like that do no depart from the gist of the present invention are included in the present invention.

This application is based upon and claims the benefit of priority from Japanese Patent Application No. 2010-230309, filed on October 13, 2010, the disclosure of which is incorporated herein in its entirety by reference.

### «Further Exemplary Embodiment»

In the step of displaying the display picture on the display unit according to claim 10 of the display method for the touch panel in the mobile terminal apparatus, in addition to determining the way of holding the mobile terminal apparatus based on the number of detected touch regions for which the touch sensors detect the touch state and the areas of the touch regions, an operation method using a finger and an upward direction of the mobile terminal apparatus are further determined, a display picture is generated, and the display picture is displayed on the display unit formed on the touch panel that serves as a user interface.

### INDUSTRIAL APPLICABILITY

The present invention can be used, for example, in mobile terminal apparatuses such as a mobile phone and a PDA. The present invention can provide mobile terminal apparatuses that provide satisfactory usability to users.

### Description of Reference Numerals

10 mobile terminal apparatus
11 CPU
21 display processing unit (display picture generation unit)
22 display (display unit)
31 touch panel processing unit
32 touch panel
41 touch sensor processing unit (way of holding determination unit)
42 top touch sensor
43 right touch sensor
44 bottom touch sensor
45 left touch sensor

## Claims

1. A mobile terminal apparatus comprising:
touch sensors which are fixed on top, bottom, left, and right sides of the mobile terminal apparatus and detect a touch state of a hand that grips the mobile terminal apparatus;
a display unit which is formed on a touch panel that serves as a user interface;
a way of holding determination unit which determines a way of holding the mobile terminal apparatus based on the number of touch regions for which the touch state is detected by the touch sensors and the areas of the touch regions; and
a display picture generation unit which generates a display picture in accordance with the way of holding determined by the way of holding determination unit and displays the display picture on the display unit.

2. The mobile terminal apparatus according to claim 1, wherein the way of holding determination unit determines the way of holding the mobile terminal apparatus based on the number of the touch regions and the areas of the touch regions detected by touch sensors that are fixed at least on left and right sides of the mobile terminal apparatus.

3. The mobile terminal apparatus according to claim 2, wherein the way of holding determination unit detects the number of the touch regions and the areas of the touch regions and determines the way of holding the mobile terminal apparatus when at least a palm of a hand that grips the mobile terminal apparatus among a plurality of fingers and the palm of the hand is touching at least one of the touch sensor fixed on the left side and the touch sensor fixed on the right side.

4. The mobile terminal apparatus according to claim 3, wherein the way of holding determination unit determines whether one of a left hand and a right hand grips the mobile terminal apparatus or both hands grip the mobile terminal apparatus based on touch information when at least the palm among the plurality of fingers and the palm is touching at least one of the touch sensor on the left side and the touch sensor on the right side.

5. The mobile terminal apparatus according to claim 4, wherein when a determination has been made that one of the left hand and the right hand grips the mobile terminal apparatus or the both hands grip the mobile terminal apparatus, the way of holding determination unit determines whether or not the touch panel is operated with the thumb of the gripping hand.

6. The mobile terminal apparatus according to any one of claims 1 to 5, wherein when the way of holding the mobile terminal apparatus is determined, the way of holding determination unit identifies an upward direction of the display picture displayed on the display unit.

7. The mobile terminal apparatus according to claim 5, wherein when the way of holding determination unit determines that the thumb of the hand that grips the mobile terminal apparatus operates the touch panel, the display picture generation unit displays an effective region that can be operated with the thumb on the display unit.

8. The mobile terminal apparatus according to any one of claims 1 to 7, wherein the display picture generation unit sets a region of the display unit that is hidden by a finger that operates the touch panel as a display forbidden region.

9. A mobile terminal apparatus comprising:
a touch panel which serves as a user interface, identifies that a finger of a hand that grips the mobile terminal apparatus is approaching without a touch by the finger, and detects a touch state of the hand;
a display unit which is formed on the touch panel;
a way of holding determination unit which determines a way of holding the mobile terminal apparatus based on the number of touch regions for which the touch panel detects the touch state and the areas of the touch regions; and
a display picture generation unit which generates a display picture in accordance with the way of holding determined by the way of holding determination unit and displays the display picture on the display unit.

10. A display method for a touch panel in a mobile terminal apparatus, the method comprising:
detecting, in touch sensors fixed on a top side, a bottom side, a left side, and a right side of the mobile terminal apparatus, a touch state of a finger and a palm of a hand that grips the mobile terminal apparatus;
determining a way of holding the mobile terminal apparatus based on the number of touch regions for which the touch sensors detect the touch state and the areas of the touch regions; and
generating a display picture in accordance with the determined way of holding the mobile terminal apparatus and displaying the display picture on a display unit formed on the touch panel that serves as a user interface.

11. A display method for a touch panel in a mobile terminal apparatus, the method comprising:
identifying, in the touch panel that serves a user interface, that a finger of a hand that grips the mobile terminal apparatus is approaching without a touch by the finger, and detecting a touch state of the finger and a palm of the hand;
determining a way of holding the mobile terminal apparatus based on the number of touch regions for which the touch panel detects the touch state and the areas of the touch regions; and
generating a display picture in accordance with the determined way of holding the mobile terminal apparatus and displaying the display picture on a display unit formed on the touch panel.
